# EUROPÄISCHE PATENTANMELDUNG

(11) **EP 1 512 434 A1**
(43) Veröffentlichungstag der Anmeldung: **09.03.2005**
(21) Anmeldenummer: 04020800.1
(22) Anmeldetag: 01.09.2004
(51) Int. Cl.: A62C 2/06

(54) **Brandschutzelement für Wände durchsetzende Rohre**

(30) Priorität: 03.09.2003 DE 10340623; 22.09.2003 DE 10343824; 23.10.2003 DE 10349494
(71) Anmelder: ACO Severin Ahlmann GmbH & Co. KG, 24755 Rendsburg (DE)
(72) Erfinder:
(74) Vertreter: Bohnenberger, Johannes, Dr.

(57) **Zusammenfassung**

Es wird ein Brandschutzelement zur Durchführung von Rohrleitungen, insbesondere Abwasserrohrleitungen durch ein Bauteil, insbesondere eine Decke aufgezeigt. Es ist ein Rohrleitungsteil (10) vorgesehen, das in der Decke (1) angebracht wird und auch bei Hitzeeinwirkung im Brandfall formstabil bleibt und das ein oberes Ankopplungselement zum Ankoppeln einer oberen Rohrleitung (5) sowie ein unteres Ankopplungselement zum Ankoppeln einer unteren Rohrleitung (7) aufweist. Es ist eine Brandabsperrung vorgesehen, die einen in einem Innenraum (16) des Rohrleitungsteils angeordneten Sperrkörper (20) aus Intumeszenzmaterial umfasst, der im Fertigungszustand den Innenraum freilässt und bei Hitzeeinwirkung im Brandfall aufquillt und den Innenraum verschließt.

## Beschreibung

Die Erfindung betrifft ein Brandschutzelement zur Durchführung von Rohrleitungen, insbesondere Abwasserrohrleitungen durch Decken, Wände oder dergleichen Bauteile.

Für Kunststoff-Abwasserrohrleitungen gibt es sog. Brandschutz-Rohrmanschetten mit integriertem Intumeszenzmaterial, die außen um das Rohr herumgelegt werden. Im Brandfall quillt das Intumeszenzmaterial unter Hitzeeinwirkung auf und verschließt das abschmelzende Rohr und somit den Rohrquerschnitt gegen Rauch und Feuer.

Für Abwasserleitungen aus Metall gilt bisher der Grundsatz der Unbrennbarkeit. Um aber die Brandwärme zu kapseln und deren Weiterleitung sowie die Weiterleitung von Feuer und Rauch in andere Brandabschnitte zu verhindern, sind relativ aufwendige Isoliermaßnahmen notwendig. Im Wesentlichen gibt es zwei Gefährdungsszenarien:
- Die Rohrleitung im Brandraum fällt aufgrund mangelhafter und unsachgemäßer Befestigung und Aufhängung des Rohrsystems im Brandraum ab. In diesem Fall wirkt die Rohrleitung wie ein Kamin, so dass Feuer, Rauch und Hitze ungehindert nach oben in die Rohrleitung eindringen können, so dass im darüber liegenden Stockwerk durch Hitzeübertragung Schäden angerichtet werden. Weitere Brände und Rauchentwicklung können die Folge sein.
- Wenn die Rohrleitung ordnungsgemäß befestigt ist und im Brandraum nicht abfällt, so leitet die Rohrleitung dennoch durch die Brandeinwirkung die Hitze über die Rohrwandungen außen am Rohr aber auch durch die innen sich übertragende Hitze nach oben ins darüber liegende Stockwerk.

Der Erfindung liegt die Aufgabe zu Grunde, ein Brandschutzelement zur Durchführung von Rohrleitungen, insbesondere von Abwasserrohrleitungen durch Decken, Wände oder dergleichen Bauteile aufzuzeigen, das mit geringem Aufwand eine erhöhte Sicherheit gewährleistet.

Diese Aufgabe wird durch ein Brandschutzelement gelöst, welches ein auch bei Hitzeeinwirkung im Brandfall formstabiles, in der Decke oder dem Bauteil anzubringendes Rohrleitungsteil umfasst, mit einem oberen Ankopplungselement zum Ankoppeln einer oberen Rohrleitung und einem unteren Ankopplungselement zum Ankoppeln einer unteren Rohrleitung sowie einer Brandabsperrung, umfassend einen in einem Innenraum des Rohrleitungsteils angeordneten Sperrkörper aus Intumeszenzmaterial, der im Fertigungszustand den Innenraum freilässt und bei Hitzeeinwirkung im Brandfall aufquillt und den Innenraum verschließt. Es wird somit nicht mehr - wie bisher üblich - die Rohrleitung zerstört und verschlossen, es wird vielmehr ein gesondertes Rohrleitungsteil eingebaut, das eine solche Sperre aufweist.

Das Rohrteil besteht vorzugsweise aus Metall, insbesondere aus Eisenguss und fügt sich somit konsequent in derartige Rohrleitungen ein.

Das erfindungsgemäße Brandschutzelement weist den großen Vorteil auf, dass es sowohl für obere und/oder untere Rohrleitungen sowohl aus Metall, also einem auch bei Hitzeeinwirkung im Brandfall formstabilen Material bestehen können, als auch aus Kunststoff, der gegebenenfalls brennbar ist. Für beide Arten von Rohrleitungen liegen besondere Vorteile vor. Bei Rohrleitungen aus Metall (-Guss) fügt sich das erfindungsgemäße Brandschutzelement, dessen Rohrleitungsteil vorzugsweise aus Eisenguss besteht, konsequent in das Material der Rohrleitungen ein und kann gleichzeitig dazu verwendet werden, diese schweren Bauteile abzustützen, so dass diese auch im Brandfall nicht abfallen. Bei Verwendung von oberen und/oder unteren Rohrleitungen aus Kunststoff wird durch das aus Metall bestehende Rohrleitungsteil die Brandgastemperatur sehr schnell an das eingeformte intumeszierende Material geleitet, so dass dieses schnell aufquellen kann und die Rohrleitung verschließt. Bei den bisher üblichen Brandschutzelementen muss hingegen die Brandschutzmanschette, welche die Rohrleitung verschließen soll, 20 bis 30 mm aus dem Bauteil, insbesondere aus der Decke hervorstehen, damit die Brandhitze schnell genug an das intumeszierende Material herangeleitet wird. Mit dem erfindungsgemäßen Bauteil wird also Platz gespart.

Der Sperrkörper ist vorzugsweise bündig zu einer Innenwand des Rohrteils angeordnet, so dass eine glatte Rohrwand ohne besondere Verschmutzungsgefahr entsteht. Vorzugsweise ist hierbei der Sperrkörper durch eine im Brandfall verformbare Hülse gegenüber dem Innenraum abgedeckt, was eine besonders glatte Innenwand ermöglicht. Diese Hülse kann auch als "Schalung" dienen, wenn der Sperrkörper gegossen wird.

Vorzugsweise ist der Sperrkörper rohrabschnittsförmig ausgebildet, so dass eine hervorragende Sperrwirkung erzielbar ist.

Das Rohrleitungsteil weist vorzugsweise auf seiner Außenseite einen vorzugsweise ringförmig ausgebildeten zweiten Sperrkörper aus Intumeszenzmaterial auf, der bei Hitzeeinwirkung im Brandfall aufquillt und einen Raum zwischen dem Rohrleitungsteil und seiner Außenumgebung verschließt. Dadurch kann es auch in diesem Bereich nicht zu einem Durchdringen von Hitze und Rauch kommen. Bei größeren Rohrdurchmessern wird das intumeszierende Material durch einen geschlitzten Metallring abgedeckt bzw. gehalten, so dass das aufschäumende Material nicht in das Rohr fallen kann. Im Brandfall schäumt das intumeszierende Material auf und drückt die Segmente des geschlitzten Ringes nach außen und hält somit den aufgeschäumten Schaum in einer sicheren Position, so dass der Verschluss sichergestellt ist.

Bei einer besonders bevorzugten Ausführungsform ist ein Hülsrohr vorgesehen, das im Bauteil bzw. in die Decke insbesondere als verlorene Schalung einbetonierbar oder in eine Kernbohrung im Bauteil bzw. in der Decke einsetzbar ist und das Halteeinrichtungen zum Halten des Rohrabschnittes aufweist. Dadurch wird eine Abstützfunktion für die oben angeschlossenen Rohrabschnitte sehr leicht möglich. Der Ein- bzw. Aufbau der Anordnung wird erheblich erleichtert, da das Brandschutzelement mit seinem Rohrleitungsteil zusammen mit dem Hülsrohr zu einer "Kompletteinheit" wird, die sehr leicht einbaubar ist. Als weiterer wesentlicher Vorteil ist zu nennen, dass nach einem Brand ein einfaches Auswechseln der Rohrdurchführung möglich wird, da das Hülsrohr, welches vorzugsweise aus Edelstahl gefertigt ist, in der Decke verbleiben kann und das Rohrleitungsteil samt dem aufgequollenen Intumeszenzmaterial mit einfachem Werkzeug entfernt werden kann.

An Stelle eines Hülsrohrs aus (Edel-) Stahl wird bei einer weiteren bevorzugten Ausführungsform der Erfindung das Hülsrohr in einem Einsatzstück oder einem Bauteil, z.B. einer vorgefertigten Durchführungsplatte aus feuerbeständigem Mörtel, Faserbeton, Steinwolle mit Schmelzpunkt über 1.000° C und einem hohen Raumgewicht oder einem derartigen geeigneten mineralischen Baustoff ausgebildet. Dieses Bauteil kann dann besonders einfach in einem Rechteckausbruch eingegossen oder in diesen eingesetzt werden.

Das Hülsrohr weist vorzugsweise in seiner Außenwand Vertiefungen zum Aufnehmen von Intumeszenzmaterial und/oder zum Eingießen in die Decke auf. Ein und dieselbe Ausnehmung (ggf. auch zusätzliche Ausnehmungen) dient also zur Aufnahme des Intumeszenzmaterials derart, dass das Hülsrohr eine glatte, zylindrische Außenfläche aufweist, wodurch es leicht in eine Kernbohrung eng eingesetzt werden kann. Wenn man das Hülsrohr als verlorene Schalung in die Decke mit eingießt, so kann dieselbe Ausnehmung, insbesondere eine ringförmige Sicke im Hülsrohr, sich mit Beton verfüllen, so dass ein sicherer Halt des Hülsrohrs gewährleistet ist.

Beim Hülsrohr aus Edelstahl dient dieselbe Ausnehmung, die sich auf der Innenwand des Hülsrohrs aus Edelstahl als Wölbung abbildet, gleichzeitig als Halteeinrichtung für das Rohrleitungsteil. Hiefür geht man derart vor, dass das Rohrleitungsteil einen nach außen vorspringenden Abschnitt aufweist, der einen größeren Durchmesser hat als der nach innen vorspringende Abschnitt des Hülsrohres. Dadurch ist gewährleistet, dass das Rohrleitungsteil in keinem Fall durch das Hülsrohr nach unten hindurchrutschen kann.

Wenn das Hülsrohr in eine Kernbohrung einer Decke eingesetzt wird, so wird in die (vorzugsweise umlaufende) Vertiefung auf der Außenseite des Hülsrohres Intumeszenzmaterial gefüllt. Im Brandfall quillt dieses Intumeszenzmaterial auf und schließt den Ringspalt zwischen dem Hülsrohr und der Kernbohrung gegenüber Feuer, Hitze und Rauch ab.

Die Halteeinrichtungen zum Halten des Rohrleitungsteils im Hülsrohr umfassen vorzugsweise Schallentkopplungseinrichtungen zum schwingungsmäßigen Entkoppeln des Rohrleitungsteils vom Hülsrohr. Dadurch kommt es nicht zu einer akustischen Kopplung zwischen dem Abwasserrohr und der Decke bzw. einer Wand.

Die Halteeinrichtungen sind vorzugsweise aus einem auch bei Hitzeeinwirkung im Brandfall formstabilen Material ausgebildet und derart geformt, dass bei Hitzeeinwirkung das Rohrleitungsteil im Hülsrohr gehalten wird. Dies geschieht in einfachster Weise wie oben beschrieben durch einen verjüngten Abschnitt im Hülsrohr und einen verdickten Abschnitt im Rohrleitungsteil, so dass das Rohrleitungsteil nur von oben in das Hülsrohr eingeschoben werden kann und nicht nach unten durchrutscht.

Wenn das Hülsrohr als gegossenes Bauteil (Faserbeton usw.) gefertigt ist, so werden natürlich dieselben Stützelemente, Entkopplungselemente usw. wie oben beschrieben vorgesehen.

Nachfolgend werden bevorzugte Ausführungsformen der Erfindung an Hand von Abbildungen näher erläutert. Hierbei zeigen
- Fig. 1 eine erste bevorzugte Ausführungsform der Erfindung im Längsschnitt,
- Fig. 2 eine zweite Ausführungsform der Erfindung in einer Darstellung ähnlich der nach Fig. 1,
- Fig. 3 einen Teil-Schnitt durch eine dritte Ausführungsform der Erfindung und
- Fig. 4 einen Teil-Schnitt durch eine vierte Ausführungsform der Erfindung.

In der nachfolgenden Beschreibung werden für gleiche und gleich wirkende Teile dieselben Bezugsziffern verwendet.

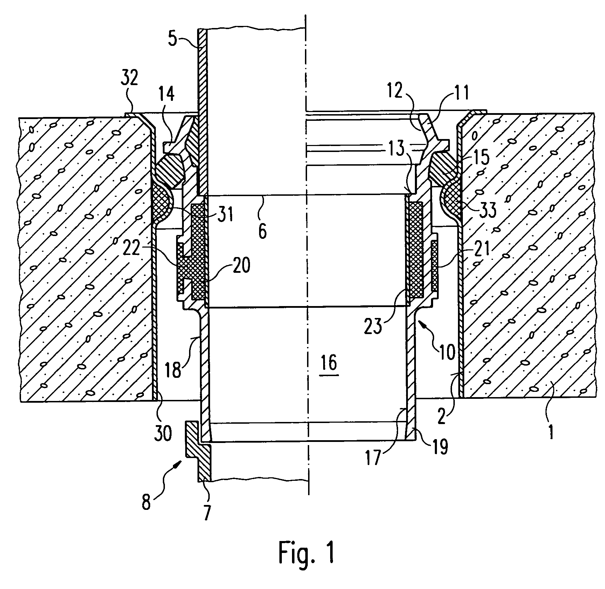

Wie aus Fig. 1 der ersten Ausführungsform ersichtlich, ist in eine Decke 1 eine Kernbohrung 2 eingebracht, in welche ein Hülsrohr 30, das vorzugsweise aus Edelstahl gefertigt ist, eingesetzt ist. Das Hülsrohr 30 weist an seinem oberen Ende einen ringförmigen Halteflansch 32 auf, der ein Durchrutschen des Hülsrohres 30 durch die Kernbohrung 2 sicher verhindert. Etwa in seinem oberen Drittel weist das Hülsrohr 30 eine nach innen eingerollte Sicke 31 auf, die sich beim Eingießen in eine Betondecke (wenn das Hülsrohr also nicht in eine Kernbohrung 2 eingesetzt ist) mit Betonmaterial füllt und das Hülsrohr 30 sicher in der Decke 1 hält. Im Falle des Einsetzens in eine Kernbohrung wird die Sicke 31 vorzugsweise mit Intumeszenzmaterial 33 gefüllt, welches bei Erwärmung im Brandfall aufquillt und den Ringspalt zwischen dem Hülsrohr 30 und der Kernbohrung 2 sicher verschließt und somit das bisher übliche, aufwendige Vermörteln/Vergießen auf der Baustelle überflüssig macht. Im Hülsrohr 30 ist ein Rohrleitungsteil 10 angeordnet, das an seinem oberen Teil eine Muffe 11 aufweist, in welche eine obere Rohrleitung 5 so einsetzbar ist, dass sie mit ihrem Unterrand 6 auf einem ringförmigen Auflager 13 des Rohrleitungsteils 10 aufsitzt. Die Muffe 11 weist einen Dichtraum 12 auf, der in üblicher Weise mit einem Dichtmaterial zum dichten Abschließen der oberen Rohrleitung gegenüber dem Rohrleitungsteil 10 versehen ist.

Das untere Ende des Rohrleitungsteils 10 ist als Spitzende 19 ausgebildet, an welchem ein unteres Rohrleitungsteil 10 mit einer Muffe 11 angesetzt werden kann. Selbstverständlich ist es auch möglich, die Rohrverbinder in anderen "Normen", z.B. als Rapid- oder CV-Verbinder sowie als Steckmuffe für Kunststoffrohre auszubilden.

Das Rohrleitungsteil 10 wird im Hülsrohr 30 durch einen Flansch 14 gehalten, dessen Außendurchmesser größer ist als der Innendurchmesser der Sicke 31. Ein Hindurchrutschen des Rohrleitungsteils 10 durch das Hülsrohr 30 kann somit nicht geschehen.

Zwischen dem Flansch 14 und der Sicke 31 ist ein Lagerring 15 aus einem vorzugsweise elastischen, akustisch dämpfenden bzw. Schwingungen kaum übertragenden Material angeordnet. Auf diese Weise kann auch ein längerer Rohrstrang abgestützt werden, ohne Schall zu übertragen.

Das Rohrleitungsteil 10 weist in seiner Innenwand 17 eine Ausnehmung auf, in welche ein erster Sperrkörper 20 aus Intumeszenzmaterial eingesetzt ist. Gegenüber dem Innenraum 16 des Rohrleitungsteils 10 ist dieser erste Sperrkörper 20 durch ein Innenrohr 13 aus relativ leicht verformbarem Kunststoffmaterial abgeschlossen. Das Innenrohr 23 weist eine Innenfläche auf, welche bündig mit der Innenwand 17 des Rohrleitungsteils 10 verläuft, so dass das Rohrleitungsteil 10 zusammen mit den Innenräumen der oberen Rohrleitung 5 und der unteren Rohrleitung 7 einen glatten Wandverlauf aufweist.

Das Rohrleitungsteil 10 weist eine Gussöffnung 22 auf, welche in den Raum zwischen dem Rohrleitungsteil 10 und dem Innenrohr 23 mündet, so dass der erste Sperrkörper 20 (ggf. auch der zweite Sperrkörper 21) aus Intumeszenzmaterial von außen eingegossen werden kann.

Auf seiner Außenseite weist das Rohrleitungsteil 10 einen zweiten Sperrkörper 21 auf, der in eine entsprechende ringförmige Ausnehmung auf der Wand des Rohrleitungsteils 10 ebenfalls eingegossen ist. Es ist somit nur ein einziger Gießvorgang zum Herstellen des ersten Sperrkörpers 20 und des zweiten Sperrkörpers 21 notwendig.

Im Brandfall, wenn also der erste Sperrkörper 20 und der zweite Sperrkörper 21 heiß werden, quillt das Intumeszenzmaterial auf, so dass das Innenrohr 23 zusammengeschnürt und der Innenraum 16 des Rohrleitungsteils 10 vollständig verschlossen werden. Der Ringspalt zwischen dem Rohrleitungsteil 10 und dem Hülsrohr 30 wird durch das aufquellende Intumeszenzmaterial des zweiten Sperrkörpers 21 verschlossen. Selbst dann, wenn der Lagerring 15 schmelzen oder sich sonstwie verformen sollte, bleibt das Rohrleitungsteil 10 sicher im Hülsrohr 30 gehalten, welches auf Grund des oberen Halteflansches 32 nicht durch die Decke 1 hindurchfallen kann. Die obere Rohrleitung 5 wird somit sicher mit ihrem Unterrand 6 auf dem Auflager 13 abgestützt und kann nicht abfallen.

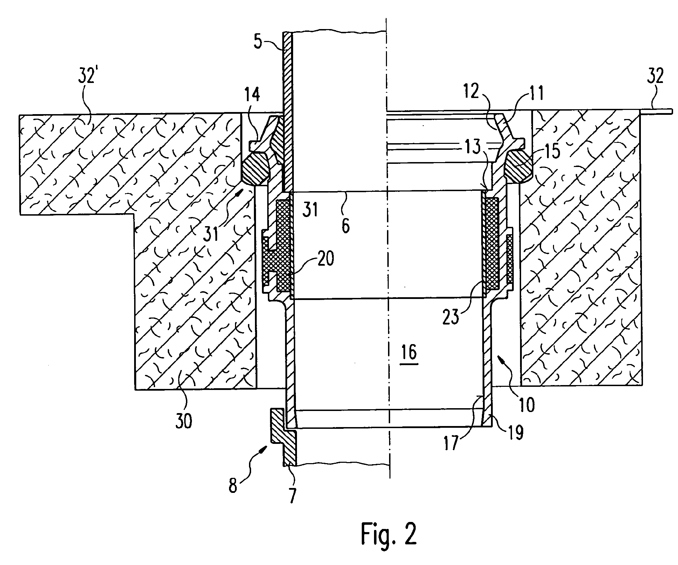

Die in Fig. 2 gezeigte Ausführungsform der Erfindung unterscheidet sich von der nach Fig. 1 dadurch, dass das Hülsrohr 30 als Bauteil aus feuerbeständigem Mörtel, Faserbeton, Steinwolle oder dergleichen geeignetem mineralischen Baustoff mit einem Schmelzpunkt über 1.000° C und einem hohen Raumgewicht ausgebildet ist. Die Außenkontur kann beliebig geformt sein, so dass das Bauteil insgesamt z.B. als Durchführungsplatte ausgebildet ist, wobei ein eingegossener Halteflansch 32 (Fig. 2 rechts) oder ein am Bauteil insgesamt ausgeformter Halteflansch 32' vorgesehen sein kann, um das Bauteil je nach Anwendungszweck z.B. in eine Holzbalkendecke, eine Hohlkammerdecke oder in einen (z.B. rechteckigen) Deckenausschnitt einsetzen und/oder eingießen zu können.

Das Rohrleitungsteil 10 sitzt auch in diesem Fall über einen Lagerring 15 akustisch entkoppelt auf einem der Sicke 31 entsprechenden Innenvorsprung des Hülsrohrs 30, der so dimensioniert ist, dass das Rohrleitungsteil 10 nicht durch das Hülsrohr 30 hindurchfallen kann, selbst wenn der Lagerring 15 schmilzt.

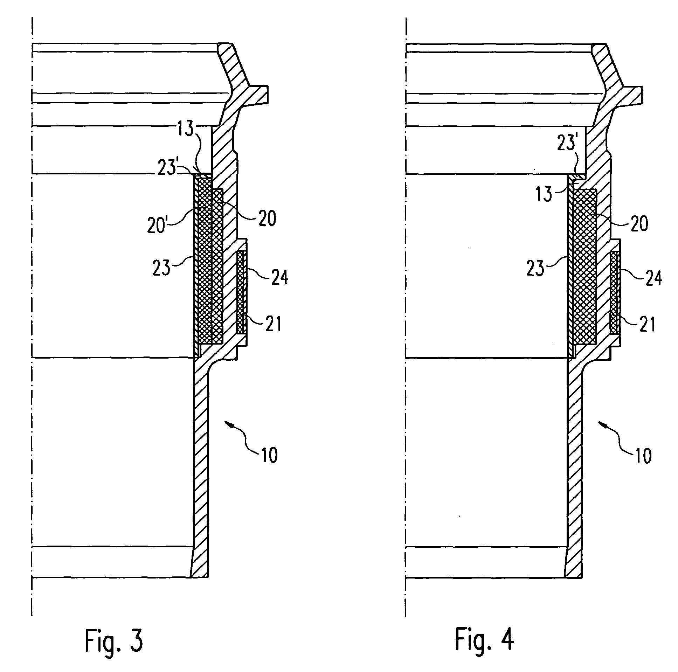

Bei der in Fig. 3 gezeigte Ausführungsform der Erfindung ist der Intumeszenzring in zwei Abschnitten aufgebaut, wobei der äußere Intumeszenzring 20 in einer Ausnehmung des Rohrleitungsteils 10 sitzt während der innere Intumeszenzring 20' als Rohrstück ausgebildet ist und von oben in das Rohrleitungsteil 10 eingesteckt werden kann. Der äußere Intumeszenzring 20 kann natürlich auch fortgelassen werden, wenn keine besonders hohe Menge von Intumeszenzmaterial gefordert ist.

Weiterhin ist bei dieser Ausführungsform der Erfindung das Innenrohr 23 mit einem L-förmigen Abschnitt 23' ausgebildet, der das Auflager 13 für ein von oben angesetztes Rohrstück bildet. Vorzugsweise ist hierbei das Intumeszenzmaterial 20' mit dem Innenrohr zur Bildung eines einheitlich handhabbaren Bauteils verbunden, so dass bei der Fertigung das Innenrohr 23 samt dem Intumeszenzmaterial 20' von oben in das Rohrleitungsteil 10 einschiebbar ist.

Dadurch, dass ein von oben aufgestecktes Rohr auf dem Abschnitt 23' des Innenrohrs 23 bzw. dem Intumeszenzmaterial 20' aufsitzt, ergibt sich eine wärmetechnische Entkopplung der Anordnung derart, dass ein eingestecktes Metallrohr keinen direkten Kontakt zum Rohrleitungsteil 10 aufweist, so dass eine nur sehr geringe Wärmeübertragung (und Übertragung akustischer Schwingungen) stattfindet und auch im Brandfall das nach oben fortführende Rohr trotz aufgeheiztem Rohrleitungsteil 10 nur wenig aufgeheizt wird und darum keine Brandgefahr für den umgebenden Raum bildet.

Der äußere zweite Sperrkörper 21 ist als Band aufgewickelt und kann auch zusätzlich mit einer Mantelhülse 24 umgeben sein, die geschlitzt ist. Beim Aufquellen des zweiten Sperrkörpers 21 werden somit die Segmente nach außen gedrückt, so dass einerseits der Hohlraum sicher verschlossen ist, andererseits das Intumeszenzmaterial sicher gehalten wird.

Es ist ersichtlich, dass bei dieser Ausführungsform der Erfindung die bei der Ausführungsform nach Fig. 1 gezeigte Gussöffnung 22 eingespart werden kann.

Bei der in Fig. 4 gezeigten weiteren Ausführungsform der Erfindung ist das Auflager 13 des Rohrleitungsteils 10 noch erhalten, jedoch ist das Innenrohr 23 ebenfalls mit einem nach außen ragenden Flansch 23' versehen, so dass ein von oben aufgestecktes Metallrohr auf dem Flansch 23' aufsitzt und (da dieses Teil aus Kunststoff besteht) thermische isoliert ist vom Innenrohr 10 mit den oben beschriebenen Vorteilen.

Selbstverständlich ist hier auch eine Kombination der Ausführungen nach Fig. 3 und 4 dahin gehend möglich, dass das Auflager 13 aus einzelnen Zapfen gebildet wird und das Intumeszenzmaterial mit Schlitzen derart versehen ist, dass man es einerseits von oben in das Rohrleitungsteil 10 einschieben kann, andererseits aber ein sicherer Halt eines von oben eingesteckten Rohres auch bei Fortfall des Intumeszenzmaterials 20 bzw. des Innenrohrs 23 gewährleistet ist.

Das "Risiko" unzureichender Brandschutzmaßnahmen wird also fort von der Baustelle in den industriellen Fertigungsbetrieb verlagert, wo definierte, bessere und damit eine höhere und gleichbleibende Qualität sichernde Arbeitsbedingungen herrschen. Auf der Baustelle steht damit ein qualitativ optimierbares Bauteil zur Verfügung, das werkzeuglos einbaubar ist.

### Bezugszeichenliste

- 1: Decke
- 2: Kernbohrung
- 5: Obere Rohrleitung
- 6: Unterrand
- 7: Untere Rohrleitung
- 8: Muffe
- 10: Rohrleitungsteil
- 11: Muffe
- 12: Dichtraum
- 13: Auflager
- 14: Flansch
- 15: Lagerring
- 16: Innenraum
- 17: Innenwand
- 18: Außenseite
- 19: Spitzende
- 20: Erster Sperrkörper
- 21: Zweiter Sperrkörper
- 22: Gussöffnung
- 23: Innenrohr
- 24: Mantelhülse
- 30: Hülsrohr
- 31: Sicke
- 32: Halteflansch
- 33: Intumeszenzmaterial

## Patentansprüche

1. Brandschutzelement zur Durchführung von Rohrleitungen, insbesondere Abwasserrohrleitungen durch eine Decke, eine Wand oder dergleichen Bauteil (1), umfassend
- ein auch bei Hitzeeinwirkung im Brandfall formstabiles, im Bauteil (1) anzubringendes Rohrleitungsteil (10) mit
-- einem oberen Ankopplungselement (11) zum Ankoppeln einer oberen Rohrleitung (5),
-- einem unteren Ankopplungselement (19) zum Ankoppeln einer unteren Rohrleitung (7),
- eine Brandabsperrung, umfassend einen in einem Innenraum (16) des Rohrleitungsteils (10) angeordneten ersten Sperrkörper (20) aus Intumeszenzmaterial, der im Fertigungszustand den Innenraum (16) freilässt und bei Hitzeeinwirkung im Brandfall aufquillt und den Innenraum (16) verschließt.

2. Brandschutzelement nach Anspruch 1,
**dadurch gekennzeichnet, dass**
das Rohrleitungsteil (10) aus Metall, insbesondere Eisenguss besteht.

3. Brandschutzelement nach einem der vorhergehenden Ansprüche,
**dadurch gekennzeichnet, dass**
die obere und/oder die untere Rohrleitung (5, 7) aus einem auch bei Hitzeeinwirkung im Brandfall formstabilen Material, insbesondere aus Eisenguss bestehen.

4. Brandschutzelement nach einem der vorhergehenden Ansprüche,
**dadurch gekennzeichnet, dass**
der erste Sperrkörper (20) bündig zu einer Innenwand (17) des Rohrteils (10) angeordnet ist.

5. Brandschutzelement nach einem der vorhergehenden Ansprüche,
**dadurch gekennzeichnet, dass**
der erste Sperrkörper (20) durch ein im Brandfall verformbares Innenrohr (28) gegenüber dem Innenraum (16) abgedeckt ist.

6. Brandschutzelement nach einem der vorhergehenden Ansprüche,
**dadurch gekennzeichnet, dass**
der erste Sperrkörper (20) rohrabschnittsförmig ausgebildet ist.

7. Brandschutzelement nach einem der vorhergehenden Ansprüche,
**dadurch gekennzeichnet, dass**
das Rohrleitungsteil (10) auf seiner Außenseite (18) einen zweiten, vorzugsweise ringförmig oder bandförmig ausgebildeten Sperrkörper (21) aus Intumeszenzmaterial aufweist, der bei Hitzeeinwirkung im Brandfall aufquillt und einen Raum außerhalb des Rohrleitungsteils (10) verschließt.

8. Brandschutzelement nach einem der vorhergehenden Ansprüche,
**gekennzeichnet durch**
ein Hülsrohr (30), das im Bauteil (1) insbesondere als verlorene Schalung einbetonierbar oder in eine Kernbohrung (2) im Bauteil (1) einsetzbar ist, und das Halteeinrichtungen (31) zum Halten des Rohrleitungsabschnittes (10) aufweist.

9. Brandschutzelement nach einem der vorhergehenden Ansprüche, insbesondere nach Anspruch 8,
**dadurch gekennzeichnet, dass**
das Hülsrohr (30) in seiner Außenwand Vertiefungen (31) zum Aufnehmen von Intumeszenzmaterial und/oder zum Eingießen in das Bauteil (1) aufweist.

10. Brandschutzelement nach einem der vorhergehenden Ansprüche, insbesondere nach einem der Ansprüche 8 oder 9,
**dadurch gekennzeichnet, dass**
das Hülsrohr (30) aus Blechmaterial, insbesondere aus Edelstahl gefertigt ist.

11. Brandschutzelement nach einem der vorhergehenden Ansprüche, insbesondere nach einem der Ansprüche 8 oder 9,
**dadurch gekennzeichnet, dass**
das Hülsrohr (30) als Bauteil aus Mörtel, Faserbeton, verdichteter Steinwolle oder dergleichen feuerbeständigem Material gefertigt ist.

12. Brandschutzelement nach einem der vorhergehenden Ansprüche, insbesondere nach einem der Ansprüche 8 - 11,
**dadurch gekennzeichnet, dass**
die Halteeinrichtungen Schallentkopplungseinrichtungen (15) zum schwingungsmäßigen Entkoppeln des Rohrleitungsteils (10) vom Hülsrohr (30) umfassen.

13. Brandschutzelement nach einem der vorhergehenden Ansprüche, insbesondere nach einem der Ansprüche 8 - 12,
**dadurch gekennzeichnet, dass**
die Halteeinrichtungen (31) aus einem auch bei Hitzeeinwirkung im Brandfall formstabilen Material ausgebildet und derart geformt sind, dass bei Hitzeeinwirkung das Rohrleitungsteil (10) im Hülsrohr (30) gehalten ist.

14. Brandschutzelement nach einem der vorhergehenden Ansprüche, insbesondere nach einem der Ansprüche 8 - 13,
**dadurch gekennzeichnet, dass**
die Halteeinrichtungen einen verengten Abschnitt (31) des Hülsrohres (30) und einen erweiterten Abschnitt (14) des Rohrleitungsteils (10) umfassen, die so dimensioniert sind, dass ein Hindurchrutschen des Rohrleitungsteils (10) durch das Hülsrohr (30) sicher verhindert ist.

15. Verwendung eines Brandschutzelementes nach einem der Ansprüche 1 - 14 zum Verbinden von Rohrleitungen, von denen mindestens eine aus einem insbesondere brennbaren Kunststoffrohr besteht.

16. Verwendung eines Brandschutzelementes nach einem der Ansprüche 1 - 14 zur Durchführung von Rohrleitungen durch Holzbalkendecken, Hohlkammerdecken oder dergleichen Bauteile, die Hohlräume aufweisen.

17. Verwendung eines Brandschutzelementes nach einem der Ansprüche 1 - 14 zur Durchführung von Rohrleitungen durch Decken zum Ersetzen von Stützschellen der Rohrleitungen.
